# FASCICULE DE BREVET EUROPEEN

(11) **EP 1 947 385 B1**
(45) Date de publication et mention de la délivrance du brevet: **25.02.2009**
(21) Numéro de dépôt: 08290031.7
(22) Date de dépôt: 15.01.2008
(51) Int. Cl.: F23K 5/14, F02C 9/26, F02C 9/28

(54) **Dispositif d'injection de carburant dans une turbomachine**
Vorrichtung zur Kraftstoffeinspritzung in eine Strömungsmaschine
Fuel injection device in a turbomachine

(30) Priorité: 19.01.2007 FR 0700386
(43) Date de publication de la demande: 23.07.2008
(73) Titulaire: HISPANO-SUIZA, 92700 Colombes (FR)
(72) Inventeur: Brettes, Frédéric, 77310 Boissise le Roi (FR); Cappellari, Jean Charles, 77850 Hericy (FR); Hodinot, Laurent Gilbert-Yves, 77240 Cesson (FR); Huet, Sandrine, 91100 Corbeil-Essonnes (FR)
(74) Mandataire: Ramey, Daniel

(56) Documents cités:
- EP-A1- 1 557 546
- FR-A1- 2 818 690
- US-A1- 2006 021 324

## Description

L'invention concerne un dispositif d'injection de carburant dans une turbomachine telle qu'un turboréacteur ou un turbopropulseur d'avion.

Ce dispositif comprend, de façon générale, au moins une pompe haute pression entraînée par la turbine de la turbomachine et dont l'entrée est reliée à un réservoir de carburant et la sortie à des moyens pilotés de réglage de débit comprenant un clapet-doseur et qui sont eux-mêmes reliés, par un moyen de pressurisation et de coupure appelé parfois clapet-stop, à des injecteurs de carburant situés dans la chambre de combustion de la turbomachine.

Le moyen de pressurisation et de coupure comprend un piston déplaçable dans un corps cylindrique entre des positions d'ouverture et de fermeture d'un conduit d'alimentation des injecteurs de carburant, ce piston étant sensible d'une part à la pression du carburant en sortie du clapet-doseur et d'autre part à une pression de commande de façon à fermer le conduit d'alimentation des injecteurs tant que la pression du carburant reste inférieure à un seuil prédéterminé.

Pendant le fonctionnement normal de la turbomachine, la différence de pression du carburant entre la sortie et l'entrée de la pompe est à une valeur suffisante pour commander des équipements accessoires comprenant notamment des aubes à calage variables (ces équipements étant appelés équipements à géométrie variable dans ce qui suit).

Lorsqu'il se produit un incident de combustion qui entraîne l'arrêt du moteur, il est souhaitable de pouvoir redémarrer le moteur en vol en utilisant la seule rotation de l'arbre moteur entraîné par le passage de l'air dans la turbomachine.

La vitesse de redémarrage de la turbomachine dans ces conditions est très inférieure à la vitesse de rotation en vol ou pendant un démarrage normal effectué au sol au moyen d'un démarreur. La pompe haute pression du dispositif d'injection de carburant est entraînée à cette faible vitesse de rotation et ne peut fournir du carburant à une pression suffisante pour ouvrir le moyen de pressurisation et de coupure et pour commander les équipements à géométrie variable.

Différents moyens ont été proposés dans la technique pour résoudre ce problème.

Dans la demande antérieure EP-A-1231368 de la demanderesse, on a proposé un moyen de pressurisation et de coupure à deux niveaux de pressurisation en fonction de la vitesse de rotation de la turbomachine, le niveau bas correspondant au ralenti et au fonctionnement du moteur aux faibles débits de carburant, le niveau élevé pouvant assurer le fonctionnement aux débits élevés de carburant. Ce moyen de pressurisation est piloté par le clapet-doseur des moyens de réglage de débit par l'intermédiaire de plusieurs diaphragmes montés en parallèle entre la pompe haute pression, le clapet-doseur et le moyen de pressurisation et de coupure.

Cette solution connue a pour inconvénient que le niveau bas de pressurisation n'est pas suffisant pour la commande des équipements à géométrie variable. Elle impose aussi de modifier le clapet-doseur et d'installer ces diaphragmes, et a donc un coût non négligeable.

La présente invention a pour but de résoudre ce problème de façon simple, efficace et peu coûteuse, notamment sans transformer le clapet-doseur.

Elle propose à cet effet un dispositif d'injection de carburant dans une turbomachine, comprenant au moins une pompe reliant un réservoir de carburant à des moyens de réglage de débit alimentant des injecteurs de carburant par l'intermédiaire d'un clapet de pressurisation et de coupure, ce clapet comprenant un piston déplaçable dans un corps cylindrique entre une position d'ouverture et une position de fermeture d'une alimentation des injecteurs, ce piston étant sensible à la pressurisation du carburant pour fermer l'alimentation des injecteurs tant que cette pressurisation est inférieure à un seuil prédéterminé, le dispositif étant caractérisé en ce que le clapet de pressurisation et de coupure comprend des moyens pour appliquer au piston, à partir du régime de ralenti de la turbomachine, une contre-pression tendant à augmenter la pressurisation du carburant au-dessus d'un second seuil prédéterminé, ce second seuil étant supérieur au premier seuil et à une valeur minimale de commande d'équipements à géométrie variable de la turbomachine.

Ainsi, selon l'invention, les moyens qui permettent d'imposer un second seuil de pressurisation au carburant, font partie du clapet de pressurisation et de coupure et non des moyens de réglage de débit.

Le second seuil de pressurisation permet, dès le régime de ralenti, de commander de façon satisfaisante les équipements à géométrie variable, tels par exemple que des aubes à calage variable.

Le premier seuil de pressurisation permet un démarrage facile du moteur au sol et un redémarrage du moteur en vol sous l'effet de la seule rotation de l'arbre moteur entraîné par le passage de l'air dans la turbomachine.

Selon une autre caractéristique de l'invention, les moyens d'application de la contre-pression comprennent un orifice formé dans le corps cylindrique du clapet et alimenté par la pression à la sortie de la pompe, cet orifice étant obturé par le piston dans sa position de fermeture de l'alimentation des injecteurs et étant ouvert par déplacement du piston à partir du régime de ralenti de la turbomachine.

Le passage du premier seuil au deuxième seuil de pressurisation est déterminé par la course du piston entre sa position de fermeture de l'alimentation des injecteurs et l'ouverture de l'orifice du corps cylindrique, c'est-à-dire en fait par la position de cet orifice le long de l'axe de déplacement du piston.

La valeur du second seuil de pressurisation est quant à elle déterminée par le diamètre de cet orifice.

La vitesse de transition entre le premier et le second seuil de pressurisation peut être déterminée par la forme de cet orifice.

Par exemple, l'orifice formé dans le corps du clapet comprend un passage cylindrique dont le diamètre détermine la valeur du second seuil de pressurisation, ce passage cylindrique débouchant dans une gorge annulaire de la surface cylindrique interne du corps du clapet, cette gorge ayant une dimension axiale ou une dimension dans l'axe de déplacement du piston qui est supérieure au diamètre du passage cylindrique précité et étant destinée à communiquer avec une gorge annulaire du piston dans laquelle sont formés des orifices radiaux qui débouchent à l'intérieur du piston.

Cette configuration permet d'augmenter beaucoup la vitesse de transition entre le premier et le second seuil de pressurisation et donc de disposer très rapidement au ralenti, d'une pression de carburant suffisante pour commander les équipements à géométrie variable de la turbomachine.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 représente schématiquement un dispositif d'injection de carburant selon l'invention ;
La figure 2 est un graphe représentant les variations d'un différentiel de pression d'un carburant en fonction du débit injecté ;
La figure 3 est une vue schématique en coupe axiale du clapet de pressurisation et de coupure du dispositif selon l'invention.

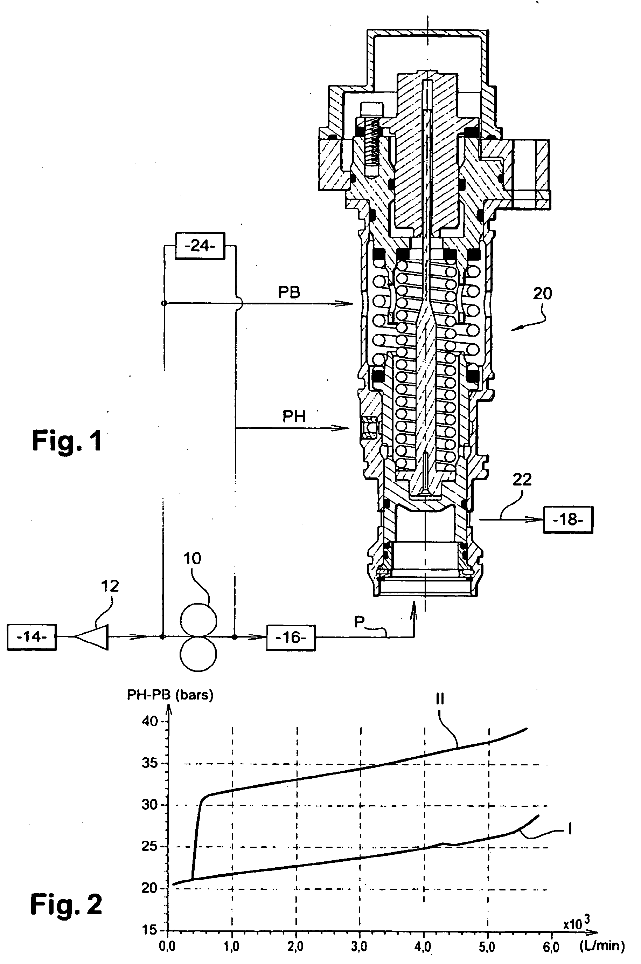

Le dispositif d'injection de carburant représenté schématiquement en figure 1 comprend essentiellement une pompe haute pression 10 dont l'entrée est reliée par une pompe basse pression 12 et par des filtres à un réservoir de carburant 14 et dont la sortie est reliée à un moyen de réglage de débit 16 (FMV ou Fuel Metering Valve) d'un type classique permettant de doser la quantité de carburant envoyée à des injecteurs 18 en fonction des conditions de fonctionnement de la turbomachine.

Un clapet 20 de pressurisation et de coupure est monté entre la sortie du moyen 16 de réglage de débit et un conduit 22 d'alimentation des injecteurs 18, ce clapet 20, appelé également clapet-stop étant sensible à la pression P du carburant à la sortie du moyen de réglage de débit 16 et interdisant l'alimentation en carburant des injecteurs 18 tant que cette pression P n'atteint pas une certaine valeur, c'est-à-dire tant que la pressurisation du carburant est inférieure à un premier seuil, cette pressurisation correspondant à la différence de pression entre la sortie et l'entrée de la pompe 10.

Ce seuil est déterminé pour permettre le redémarrage de la turbomachine en vol lorsque l'arbre moteur n'est entraîné en rotation que par l'air qui circule à l'intérieur de la turbomachine.

Ce seuil de pressurisation, qui est relativement bas (par exemple environ 19 bars), facilite également le démarrage de la turbomachine au sol au moyen d'un démarreur, par exemple à air comprimé.

Selon l'invention, le clapet 20 de pressurisation et de coupure est conçu pour définir un second seuil de pressurisation, supérieur au premier et qui doit être atteint ou dépassé dès que l'on est sorti d'une phase de démarrage ou de redémarrage de la turbomachine, ce second seuil de pressurisation ayant une valeur de 30 bars environ par exemple et étant suffisamment élevé pour que la pressurisation du carburant, c'est-à-dire la différence de pression PH-PB entre la sortie et l'entrée de la pompe 10, soit suffisante pour commander sans difficulté un ensemble 24 d'équipements auxiliaires à géométrie variable comprenant notamment des actionneurs d'aubes à calage variable.

Le diagramme de la figure 2 représente la variation de la différence de pression PH-PB en fonction du débit de carburant fourni aux injecteurs 18, la courbe I représentant cette variation lorsque le clapet de pressurisation et de coupure ne définit qu'un seuil de pressurisation, et la courbe II représentant cette variation dans le cas d'un clapet 20 conforme à l'invention, qui définit deux seuils de pressurisation comme indiqué ci-dessus.

On voit sur ce diagramme que, dans le dispositif selon l'invention, la transition entre le premier et le second seuil de pressurisation se fait très rapidement pour un débit précis de carburant injecté qui est relativement très faible et qui est atteint dès que les phases de démarrage ou de redémarrage sont terminées. Ainsi, lorsque la turbomachine fonctionne au ralenti, la différence PH-PB est supérieure à 30 bars et est largement suffisante pour commander les équipements à géométrie variable.

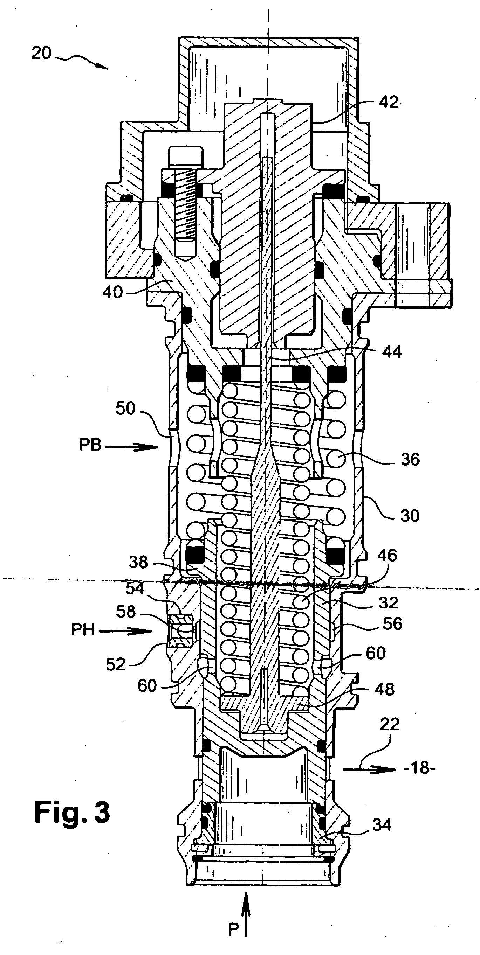

On va maintenant décrire, en référence à la figure 3, les caractéristiques du clapet 20 de pressurisation et de coupure qui permettent de définir ces deux seuils de pressurisation du carburant.

Ce clapet qui est dessiné en position verticale dans les figures 1 et 3, comprend essentiellement un corps cylindrique 30 dont l'extrémité inférieure ouverte est reliée à la sortie du moyen 16 de réglage de débit, et un piston 32 guidé en coulissement étanche à l'intérieur du corps 30 entre une position inférieure, représentée en figure 3, de fermeture du conduit 22 d'alimentation des injecteurs 18, et une position supérieure dans laquelle il ouvre ce conduit d'alimentation.

La position inférieure du piston 32 est définie par un siège 34 monté fixement dans l'extrémité inférieure ouverte du corps 30.

Le piston 32 est rappelé en permanence vers sa position inférieure en appui sur le siège 34 par un ressort 36 monté autour du piston et venant en appui à ses extrémités sur un rebord externe 38 de la partie supérieure du piston 32 et sur un siège 40 monté fixement à l'extrémité supérieure du corps 30.

Le siège 40 porte un capteur central 42, par exemple du type électromagnétique, de détection de la position axiale d'une tige 44 liée au piston 32.

Dans l'exemple de réalisation représenté, le piston 32 est de forme cylindrique tubulaire à extrémité inférieure fermée et à extrémité supérieure ouverte, la tige 44 s'étendant à l'intérieur du piston 32 et étant sollicitée en appui sur le fond du piston par un ressort de rappel 46 qui est en appui à son extrémité inférieure sur un rebord 48 de l'extrémité inférieure de la tige 44 et qui s'appuie à son extrémité supérieure sur le siège 40 monté fixement à l'extrémité supérieure du corps 30, le ressort 46 servant comme le ressort 36 à rappeler le piston 32 vers sa position inférieure en appui sur le siège 34.

Le premier seuil de pressurisation est défini par application à l'intérieur du corps 30 de la pression du carburant à l'entrée de la pompe 10, cette pression étant appliquée par au moins un orifice 50 formé dans la partie du corps 30 qui se trouve au-dessus du piston 32 de façon à ce que la pression PB puisse agir sur le piston 32 quelle que soit la position de celui-ci, pour le solliciter vers le bas.

Le second seuil de pressurisation est défini par application au piston 32 de la pression du carburant PH en sortie de la pompe 10, au moyen d'un orifice 52 formé dans le corps 30 à un niveau inférieur à celui de l'orifice 50, de façon à ce que cet orifice 52 puisse être obturé par le piston 32 lorsque celui-ci est dans sa position inférieure, et ouvert lorsque le piston 32 est déplacé vers le haut par la pression P du carburant à la sortie du moyen 16 de réglage de débit, la pression PH du carburant agissant alors sur le piston 32 pour le solliciter vers le bas, cette pression P étant déterminée par la pression dans le conduit 22 d'alimentation des injecteurs, par la pression dans le corps 30 et par le débit de carburant fourni aux injecteurs.

Plus précisément, l'orifice 52 comprend un passage cylindrique 54 qui débouche à l'extérieur du corps 30 et dont la profondeur est inférieure à l'épaisseur du corps 30 à cet endroit, une gorge annulaire 56 qui est formée dans la surface cylindrique interne du corps 30 à hauteur du passage 54, et un orifice 58 de très faible diamètre qui est formé dans l'épaisseur de matière séparant le passage 54 de la gorge annulaire 56 et qui les fait communiquer l'un avec l'autre.

La paroi cylindrique du piston 32 comprend au moins un et de préférence plusieurs orifice radiaux 60 formés dans un même plan transversal et répartis autour de l'axe du piston, qui sont formés dans une gorge annulaire de la surface périphérique extérieure du piston et qui sont destinés à être amenés au niveau de la gorge annulaire 56 du corps 30 quand le piston est déplacé vers le haut par la pression P du carburant appliquée à l'extrémité inférieure du corps 30.

Comme on le voit sur la figure 3, lorsque le piston 32 est dans sa position inférieure de fermeture du conduit 22 d'alimentation des injecteurs 18, la gorge annulaire du piston 32 dans laquelle sont formés les orifices radiaux 60 est à une faible distance axiale de la gorge annulaire 56 de la surface interne du corps 30.

Cette distance axiale définit la longueur du premier seuil de pressurisation.

Le niveau du second seuil de pressurisation est défini par le diamètre de l'orifice 58 et la valeur du débit de carburant injecté pour laquelle se produit la transition entre les deux seuils de pressurisation est déterminée par la position axiale de l'orifice 58 dans le corps 30.

On voit que l'invention permet de définir deux seuils de pressurisation du carburant, l'un pour le démarrage et le rallumage, l'autre à partir du ralenti, moyennant une modification simple et peu coûteuse du clapet de pressurisation et de coupure.

## Revendications

1. Dispositif d'injection de carburant dans une turbomachine, comprenant au moins une pompe (10) reliant un réservoir (14) d'un carburant à des moyens (16) de réglage de débit alimentant des injecteurs de carburant (18) par l'intermédiaire d'un clapet (20) de pressurisation et de coupure, ce clapet comprenant un piston (32) déplaçable dans un corps cylindrique (30) entre une position de fermeture et une position d'ouverture d'une alimentation (22) des injecteurs, le piston (32) étant sensible à la pressurisation du carburant pour fermer l'alimentation (22) des injecteurs tant que cette pressurisation est inférieure à un premier seuil prédéterminé, **caractérisé en ce que** le clapet (20) de pressurisation et de coupure comprend des moyens (52, 56, 60) pour appliquer au piston (32), à partir du régime de ralenti de la turbomachine, une contre-pression PH créant un second seuil de pressurisation, ce second seuil étant supérieur au premier et à une valeur minimale de commande d'équipements (24) à géométrie variable de la turbomachine.

2. Dispositif selon la revendication 1, **caractérisé en ce que** les moyens d'application de la contre-pression comprennent un orifice (52) formé dans le corps cylindrique (30) du clapet et alimenté par la pression à la sortie de la pompe (10), cet orifice (52) étant obturé par le piston (32) dans sa position de fermeture de l'alimentation (22) des injecteurs et étant ouvert par déplacement du piston à partir du régime de ralenti de la turbomachine.

3. Dispositif selon la revendication 2, **caractérisé en ce que** la course du piston (32) entre sa position de fermeture de l'alimentation (22) des injecteurs et l'ouverture de l'orifice (52) du corps cylindrique (30) détermine le débit de carburant injecté pour lequel s'effectue la transition du premier seuil au second seuil de pressurisation.

4. Dispositif selon la revendication 2 ou 3, **caractérisé en ce que** le diamètre de l'orifice (58) d'admission de la contre-pression à l'intérieur du corps (30) détermine la valeur du second seuil de pressurisation.

5. Dispositif selon l'une des revendications 2 à 4, **caractérisé en ce que** la forme des moyens d'application (52, 56, 60) de la contre-pression sur le piston (32) détermine la vitesse de transition entre le premier et le second seuil de pressurisation.

6. Dispositif selon l'une des revendications 2 à 5, **caractérisé en ce que** l'orifice (52) formé dans le corps cylindrique (30) comprend un orifice (58) de diamètre déterminé, qui débouche dans une gorge annulaire (56) de la surface cylindrique interne du corps (30).

7. Dispositif selon la revendication 6, **caractérisé en ce que** la gorge annulaire (56) de la surface interne du corps (30) est destinée à communiquer avec une gorge annulaire de la surface cylindrique externe du piston (32), dans laquelle sont formés des orifices radiaux (60) débouchant à l'intérieur du piston (32).

8. Dispositif selon l'une des revendications précédentes, **caractérisé en ce que** le corps cylindrique (30) du clapet comprend un autre orifice (50) relié à l'entrée de la pompe (10), cet orifice (50) étant axialement écarté des moyens d'application de la contre-pression définissant le second seuil de pressurisation, pour faire agir en permanence la pression PB à l'entrée de la pompe sur le piston (32) et définir le premier seuil de pressurisation.

9. Turbomachine, telle qu'un turboréacteur ou turbopropulseur d'avions, **caractérisée en ce qu'**elle comprend un dispositif d'injection de carburant selon l'une des revendications précédentes.

## Claims

1. A fuel injection device in a turbomachine, comprising at least one pump (10) connecting a fuel tank (14) to flow rate control means (16) supplying fuel injectors (18) through the intermediary of a pressurization and cut-off valve (20), such valve comprising a piston (32) that can be moved inside a cylindrical body between a closed position and an open position for feeding (28) the injectors, the piston (32) being sensitive to the pressurization of the fuel for closing the injector supply (22) as long as such pressurization is lower than a first predetermined threshold, **characterized in that** the pressurization and cut-off valve (20) comprises means (52, 56, 60) for applying a counter-pressure PH on the piston (32), as from the idle speed of the turbomachine, thereby creating a second pressurization threshold, such second threshold exceeding the first threshold and a minimal value for controlling equipment (24) with variable geometry of the turbomachine.

2. A device according to claim 1, **characterized in that** the means for applying counter-pressure comprise an orifice (52) formed in the cylindrical body (30) of the valve and through which passes pressure from the outlet of the pump (10), this orifice (52) being sealed off by the piston (32) in its closed injector-feeding position and being open again by moving the piston as from the idle speed of the turbomachine.

3. A device according to claim 2, **characterized in that** the course of the piston (32) between its closed injector feeding position and the opening of the orifice (52) of the cylindrical body (30) determines the flow rate of the injected fuel for which is performed the transition from the first pressurization threshold to the second threshold.

4. A device according to claim 2 or 3, **characterized in that** the diameter of the admission orifice (58) of the counter-pressure inside the body (30) determines the value of the second pressurization threshold.

5. A device according to one of claims 2 to 4, **characterized in that** the shape of the means (52, 56, 60) for applying the counter-pressure on the piston (32) determines the transition speed between the first and the second pressurization threshold.

6. A device according to one of claims 2 to 5, **characterized in that** the orifice (52) formed in the cylindrical body (30) comprises a hole (58) of a determined diameter, which opens into an annular groove (56) of the internal cylindrical surface of the body (30).

7. Device according to claim 6, **characterized in that** the annular groove (56) of the internal surface of the body (30) is adapted to communicate with an annular groove of the external cylindrical surface of the piston (32), in which are formed radial orifices (60) opening inside the piston (32).

8. Device according to one of the preceding claims, **characterized in that** the cylindrical body (30) of the valve comprises another orifice (50) connected to the inlet of the pump (10), this orifice (50) being axially spaced away from the means for applying the counter-pressure defining the second pressurization threshold, in order to permanently apply the pressure PB at the pump inlet on the piston (32) and to define the first pressurization threshold.

9. A turbomachine, such as an aeroplane turboreactor or a turbopropeller, **characterized in that** comprises a fuel-injection device according to one of the preceding claims.

## Patentansprüche

1. Vorrichtung zum Einspritzen von Kraftstoff in eine Turbomaschine mit wenigstens einer Pumpe (10), die einen Behälter (14) für einen Kraftstoff mit Mitteln (16) zur Durchsatzregelung verbindet, die Kraftstoffinjektoren (18) über ein Ventil (20 zur Druckbeaufschlagung und zur Unterbrechung versorgt, wobei dieses Ventil einen Kolben (32) aufweist, der in einem zylindrischen Körper (30) zwischen einer Verschlussposition und einer Öffnungsposition einer Versorgung (22) der Injektoren verschiebbar ist, wobei der Kolben (32) gegenüber der Druckbeaufschlagung des Kraftstoffs empfindlich ist, um die Versorgung (22) der Injektoren zu verschließen, solange diese Druckbeaufschlagung unter einem ersten vorbestimmten Schwellenwert liegt, **dadurch gekennzeichnet, dass** das Ventil (20) zur Druckbeaufschlagung und zur Unterbrechung Mittel (52, 56, 60) aufweist, um auf den Kolben (32) ausgehend von der Leerlaufdrehzahl der Turbomaschine einen Gegendruck PH aufzubringen, der einen zweiten Druckbeaufschlagungsschwellenwert erzeugt, wobei dieser zweite Schwellenwert über dem ersten und einem minimalen Wert zum Steuern von Einrichtungen (24) mit variabler Geometrie der Turbomaschine liegt.

2. Vorrichtung nach Anspruch 1, **dadurch gekennzeichnet, dass** die Mittel zum Aufbringen des Gegendrucks ein Loch (52) aufweisen, das in dem zylindrischen Körper (30) des Ventils ausgebildet ist und durch den Druck am Ausgang der Pumpe (10) versorgt wird, wobei dieses Loch (52) von dem Kolben (32) in seiner Position zum Verschließen der Versorgung (22) der Injektoren verstopft ist und durch Verschieben des Kolbens ausgehend von der Leerlaufdrehzahl der Turbomaschine geöffnet wird.

3. Vorrichtung nach Anspruch 2, **dadurch gekennzeichnet, dass** der Hub des Kolbens (32) zwischen seiner Position zum Verschließen der Versorgung (22) der Injektoren und der Öffnung des Lochs (52) des zylindrischen Körpers (30) den Durchsatz an eingespritztem Kraftstoff bestimmt, für welchen der Übergang von dem ersten Schwellenwert zu dem zweiten Druckbeaufschlagungsschwellenwert erfolgt.

4. Vorrichtung nach Anspruch 2 oder 3, **dadurch gekennzeichnet, dass** der Durchmesser des Lochs (58) zum Einlass des Gegendrucks ins Innere des Körpers (30) den Wert des zweiten Druckbeaufschlagungsschwellenwerts bestimmt.

5. Vorrichtung nach einem der Ansprüche 2 bis 4, **dadurch gekennzeichnet, dass** die Form der Mittel (52, 56, 60) zum Aufbringen des Gegendrucks auf den Kolben (32) die Geschwindigkeit des Übergangs zwischen dem ersten und dem zweiten Druckbeaufschlagungsschwellenwerts bestimmt.

6. Vorrichtung nach einem der Ansprüche 2 bis 5, **dadurch gekennzeichnet, dass** das in dem zylindrischen Körper (30) ausgebildete Loch (52) ein Loch (58) mit bestimmtem Durchmesser aufweist, das in eine ringförmige Kehle (56) der zylindrischen Innenfläche des Körpers (30) mündet.

7. Vorrichtung nach Anspruch 6, **dadurch gekennzeichnet, dass** die ringförmige Kehle (56) der Innenfläche des Körpers (30) dazu bestimmt ist, mit einer ringförmigen Kehle der zylindrischen Außenfläche des Kolbens (32) in Verbindung zu treten, in welcher radiale Löcher (60) ausgebildet sind, die im Inneren des Kolbens (32) münden.

8. Vorrichtung nach einem der vorhergehenden Ansprüche, **dadurch gekennzeichnet, dass** der zylindrische Körper (30) des Ventils ein weiteres Loch (50) aufweist, das mit dem Eingang der Pumpe (10) verbunden ist, wobei dieses Loch (50) axial von den Mitteln zum Aufbringen des Gegendrucks entfernt sind, die den zweiten Druckbeaufschlagungsschwellenwert definieren, um ständig den Druck PB am Eingang der Pumpe auf den Kolben (32) wirken zu lassen und den ersten Druckbeaufschlagungsschwellenwert zu definieren.

9. Turbomaschine wie ein Strahltriebwerk oder ein Turboproptriebwerk für Flugzeuge, **dadurch gekennzeichnet, dass** sie eine Vorrichtung zum Einspritzen von Kraftstoff nach einem der vorhergehenden Ansprüche aufweist.
